# EUROPEAN PATENT APPLICATION

(11) **EP 3 627 492 A1**
(43) Date of publication of application: **25.03.2020**
(21) Application number: 19186931.2
(22) Date of filing: 18.07.2019
(51) Int. Cl.: G10K 11/178

(54) **NOISE REDUCTION DEVICE, NOISE REDUCTION SYSTEM, AND SOUND FIELD CONTROLLING METHOD**

(30) Priority: 21.09.2018 US 201862734260 P
(71) Applicant: Panasonic Intellectual Property Management Co., Ltd., Osaka-shi, Osaka 540-6207 (JP)
(72) Inventor: KUBOTA, Kenichi, Osaka-shi, Osaka 540-6207 (JP); YAMAGUCHI, Takahiro, Osaka-shi, Osaka 540-6207 (JP); ARAKI, Junji, Osaka-shi, Osaka 540-6207 (JP); ABE, Satoshi, Osaka-shi, Osaka 540-6207 (JP)
(74) Representative: Grünecker Patent- und Rechtsanwälte PartG mbB

(57) **Abstract**

In the noise reduction device (530), the sound receiver (531) receives a noise signal acquired from the microphone (520). The sound source input unit (537) receives an input of a sound source signal from a sound source. The sound adjuster (53A) changes the intensity of the sound source signal relative to the intensity of the noise signal. The control sound generator (532) generates a control sound signal that reduces the noise signal. The control unit (533) controls the change of the intensity of the sound source signal and the generation of the control sound signal. The sound output (560) outputs the control sound signal to the speaker (540). The sound output (560) outputs to the speaker (540) the sound source signal at the intensity changed by the sound adjuster (53A).

## Description

### TECHNICAL FIELD

The present disclosure relates to a noise reduction device, a noise reduction system or a sound field controlling method in a predetermined space. The present disclosure relates to, for example, a noise reduction device, a noise reduction system, or a sound field controlling method that is used inside an enclosed structure disposed in a movable vehicle such as an aircraft or a railway vehicle.

### BACKGROUND ART

A movable vehicle such as noisy aircraft or vehicle sometimes provides services such as music stream for passengers seated in seats. When an aircraft or railroad vehicle travels at high speed, various types of noise are generated at different places in the vehicle due to vibration caused by the engine or motor that drives the vehicle, air colliding with the structure of the vehicle, and other such phenomena. How this noise travels to each seat, the volume (amplitude) of the noise at each seat, and how long the noise takes to reach each seat (phase) differ depending on where the seat is located.

JP-A-1998-171468 discloses a method in which speakers are arranged and positioned in view of the point where noise is to be reduced (also called as "silence center" or "control point"), thereby enhancing reduction of a random noise.

Japanese Patent No. 2642857 discloses an acoustic crosstalk control device capable of sound amplification independently in each of adjacent seats. The acoustic crosstalk control device performs addition processing to the regular music information for a passenger at the first position so as to cancel out a crosstalk sound from the second position in the adjacent seat, thereby suppressing the crosstalk sound.

### SUMMARY

The noise reduction device, the noise reduction system or the sound field control system of the present disclosure is effective for effectively generating a sound field in the target space while obtaining the noise reduction effect.

The noise reduction device of the present disclosure includes a sound receiver, a sound source input, a sound adjuster, a control sound generator, a controller, and a sound output. The sound receiver receives a first sound signal acquired from a microphone. The sound source input receives an input of a second sound signal from a sound source. The sound adjuster changes an intensity of the second sound signal relative to an intensity of the first sound signal. The control sound generator generates a third sound signal that reduces the first sound signal. The controller controls a change of the intensity of the second sound signal and controls the generation of the third sound signal. The sound output outputs the third sound signal and outputs the second sound signal to the speaker at the intensity changed by the sound adjuster.

The noise reduction system of the present disclosure includes the noise reduction device, one or more microphones for acquiring noise, and one or more speakers for outputting the second sound signal and the third sound signal.

The sound field controlling method of the present disclosure is a sound field controlling method for controlling a sound in a target space. The method includes receiving a first sound signal acquired from a microphone, receiving from a sound source a second sound signal different from the first sound signal, changing an intensity of the second sound signal relative to an intensity of the first sound signal, generating a third sound signal that reduces the first sound signal, and outputting the third sound signal to a speaker, and outputting to the speaker the second sound signal whose intensity has been changed.

### BRIEF DESCRIPTION OF DRAWINGS

FIG. 1 schematically shows an aircraft in which a noise reduction system is installed.
FIG. 2 shows an example of a noise source in the aircraft.
FIG. 3A shows a basic configuration of the noise reduction system.
FIG. 3B is a view showing a mechanism for superposing a control sound and noise.
FIG. 4 is a plan view showing an arrangement example of the noise reduction system installed around a seat in the aircraft.
FIG. 5 shows a configuration of the noise reduction system according to Embodiment 1.
FIG. 6 is an elevation view for explaining the installation environment of the noise reduction system in a seat.
FIG. 7 is a graph showing frequency spectra of noise and a sound source.
FIG. 8 is a graph showing frequency spectra of noise and a sound source.
FIG. 9 is a graph showing frequency spectra of noise and a sound source.
FIG. 10 shows a configuration of the noise reduction system according to Embodiment 2.
FIG. 11 shows a configuration of the noise reduction system according to another embodiment.
FIG. 12 is a flowchart showing an operation of sound field control performed by the noise reduction system.

### DETAILED DESCRIPTION

Hereinafter, embodiments will be described in detail, with reference to the drawings when appropriate. Any explanations deemed unnecessary may be omitted. For example, detailed descriptions of well-known aspects or duplicate descriptions of substantially identical components may be omitted from this disclosure. This is to avoid unnecessary redundant description in the following and to facilitate understanding by those skilled in the art.

It is to be noted that the attached drawings and the following description are provided to enable those skilled in the art to fully understand the present disclosure, and they are not intended to limit the claimed subject matter.

Hereinafter, the noise reduction device or the noise reduction system according to the present embodiment will be described by way of an example where the device is mounted on an aircraft 100.

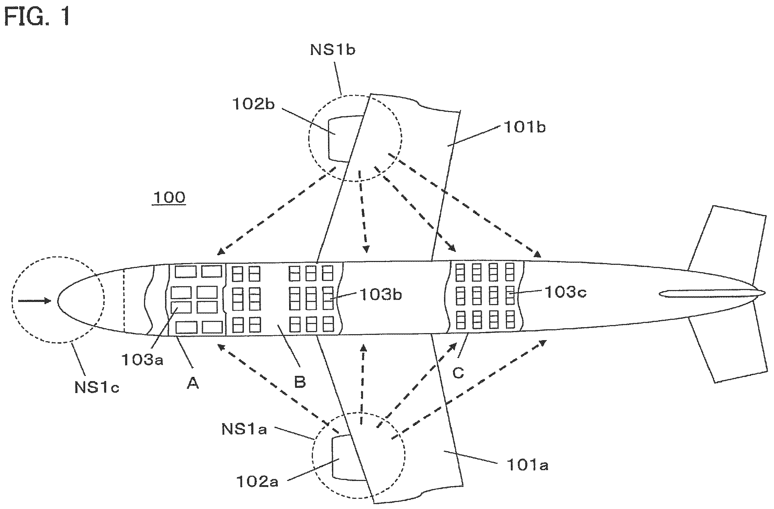

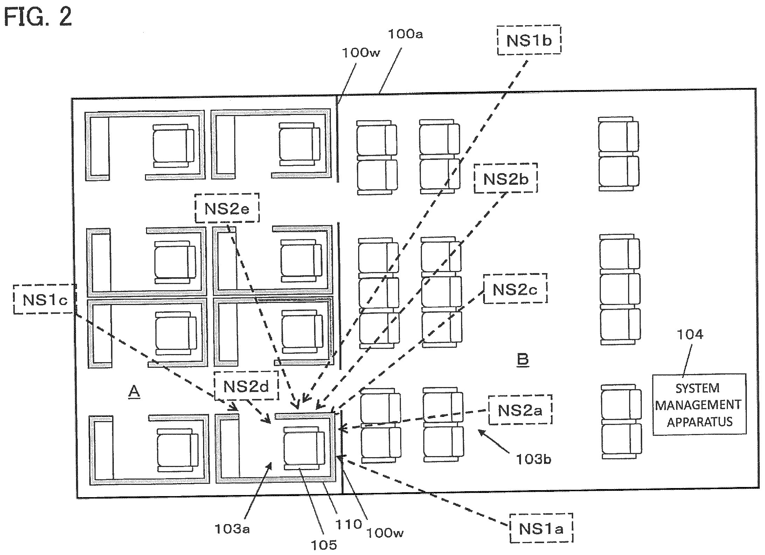

First, an acoustic environment in the aircraft 100 that requires the installation of the noise reduction device will be described using FIGS. 1 and 2.

FIG. 1 is a plan view showing an environment (within the aircraft 100) in which the noise reduction system according to the present embodiment is installed.

As shown in FIG. 1, the aircraft 100 includes left and right wings 101a and 101b, and engines 102a and 102b mounted to the wings 101a and 101b, respectively. Here, in terms of acoustic environment, the space inside the aircraft 100 is greatly affected by noise generated by the engines 102a and 102b. This noise includes both noise of the engines rotating and reverberation of air that passes through the engines during flight.

The engines 102a and 102b act as, for example, external noise sources NS1a and NS1b relative to rows of seats 103a, 103b, and 103c respectively located in a seating cabin A (for example, first class), a seating cabin B (for example, business class), and a seating cabin C (for example, economy class) in the aircraft. In addition, the noise (wind roar) of air colliding with the air flow at the tip and side faces of the body of the aircraft and the wings 101a and 101b when the aircraft 100 travels at high speed in the airspace acts as a noise source NS1c and adversely affects the provision of information services and the like in the aircraft 100.

Furthermore, an air conditioning system (not shown) equipped with pressurization, ventilation, and temperature control functions is installed in the aircraft 100 in order to clean, maintain, and circulate air inside the aircraft. The sound from the air conditioning system is also a noise source in addition to the noise sources NS1a, NS1b, and NS1c, as described later.

FIG. 2 is a plan view showing details of the installation environment of the noise reduction device. FIG. 2 is an enlarged view of the arrangement of seats in part of the seating cabin A and the seating cabin B in FIG. 1

The seating cabin 100a is partitioned into a seating cabin A and a seating cabin B by walls 100w. Seating rows 103a and 103b are located in the seating cabin A and the seating cabin B, respectively.

The acoustic environment in the entire seating cabin 100a includes, as external noise sources, the noise sources NS1a and NSlb generated by the engines 102a and 102b, and wind roars (noise source NS1c) at the tip and side face of the aircraft body. Furthermore, there are the noise sources NS2a to NS2e generated by the air conditioning system and other components, as internal noise sources.

Assume that one seat 105 in the seating cabin A is affected by the noise from the noise sources. The seat 105 is affected by noise from noise sources NS1a to NS1c generated by the sound of airflow and the engines 102a and 102b (see FIG. 1) that are mounted to the wings on the outside of the window, and by noise from the noise sources NS2a to NS2e that is generated by the air conditioning system or other components.

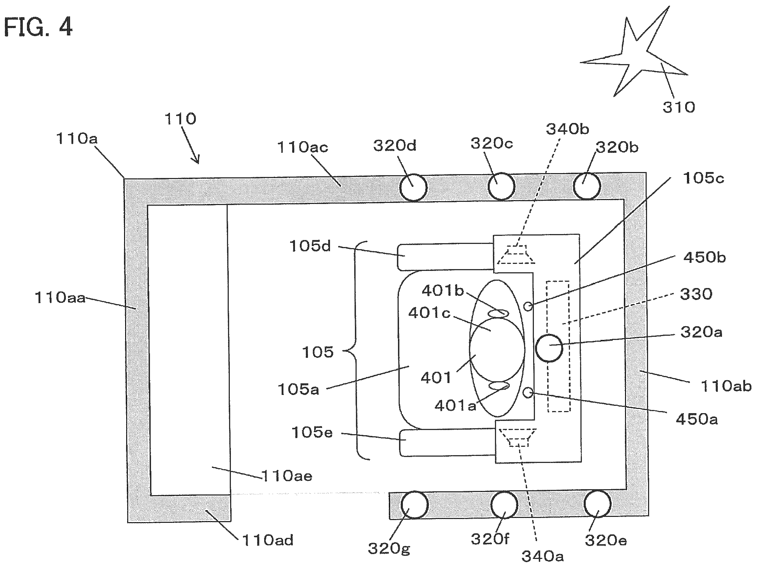

In the first class shown by the seating cabin A or the like in FIG. 1, the seat 105 is surrounded by a shell structure 110 that is a target space for noise reduction, as shown in FIG. 4. Inside the shell structure, there are viewing devices such as a television and a radio for the passenger to enjoy movies and music, a desk for business purposes, a PC connection power source and the like. The seat 105 such as of the first class and other classes is strongly required to provide an environment where passengers can relax and focus on business. Therefore, the demand for noise reduction in the target space is particularly high.

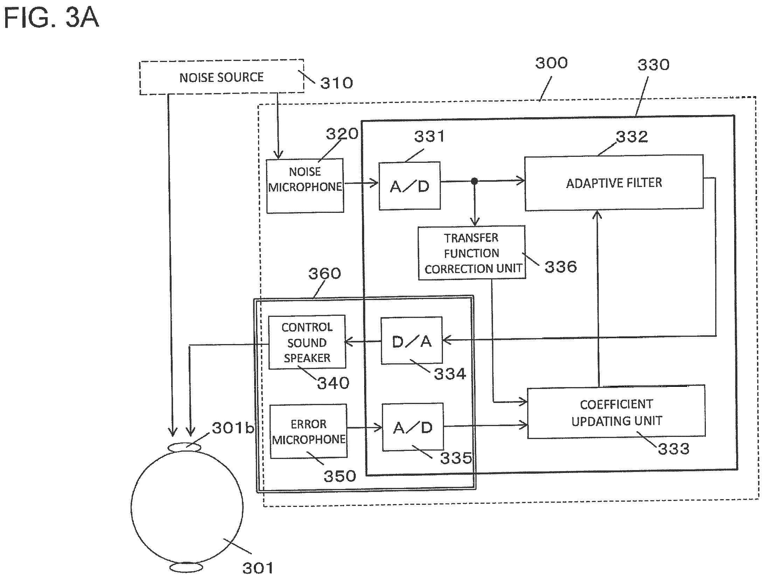

FIG. 3A is a block diagram showing a basic configuration of the noise reduction system 300. The noise reduction system 300 is disposed in the space of each seat. The noise reduction system 300 includes a plurality of microphones for detecting noise and a plurality of speakers for outputting a control sound, and generates and outputs the control sound for canceling out the detected noise. The plurality of speakers and microphones are embedded in a seat cover or the like. In such a structure, it is necessary to measure (calibrate) propagation characteristics of sound waves between the speakers and the microphones for each seat. Hereinafter, the specific configuration of the noise reduction system 300 will be described.

The noise reduction system 300 is a feedforward noise reduction system, and includes a noise microphone 320, a noise controller 330, a control sound speaker 340, and an error microphone 350, as shown in FIG. 3A.

The noise microphone 320 is a microphone that detects noise emitted from the noise source 310, converts the detected noise information into an electrical signal, and outputs the electrical signal.

The error microphone 350 is a microphone that detects a residual sound (error sound) obtained by superimposing the noise emitted from the noise source 310 and the control sound emitted from the control sound speaker 340, converts the error sound into an electrical signal, and outputs it. The control sound is a sound signal generated so as to cancel out the noise.

The noise controller 330 includes a processor and a memory including circuitry such as a DSP (Digital Signal Processor) or a CPU. As shown in FIG. 3A, the noise controller 330 includes A/D converters 331 and 335, an adaptive filter 332, a coefficient updating unit 333, a D/A converter 334, and a transfer function correction unit 336. Based on the noise information from the noise microphone 320 and the error information of the error microphone 350, the noise controller 330 generates a control sound signal so as to minimize the detection error.

The adaptive filter 332 is a circuit that generates a control sound signal that reduces noise. The adaptive filter 332 is configured by multistage taps, and is a FIR (Finite Impulse Response) filter that can freely set the filter coefficient of each tap. The coefficient updating unit 333 is provided by a predetermined algorithm executed by a processor. The coefficient updating unit 333 obtains a control sound from the error microphone 350 via the A/D converter 335, in addition to the noise input from the noise microphone 320. Then, the coefficient updating unit 333 adjusts each filter coefficient of the adaptive filter 332 so as to minimize the error sound. In other words, the adaptive filter 332 and the coefficient updating unit 333 generate a control sound signal having a phase opposite to the noise from the noise source 310 at a control point where the error microphone 350 is installed. The generated control sound signal is output to the control sound speaker 340 via the D/A converter 334.

The transfer function correction unit 336 is a multistage tap FIR filter that represents a transfer function within the range of the transfer path. That is, the transfer function correction unit 336 expresses the transfer function between the output of the adaptive filter 332 generating a control sound through the D/A converter 334 and the control sound speaker 340, and the generated control sound reaching the coefficient updating unit 333 through the error microphone 350 and the A/D converter 335.

The A/D converter 331 is provided for each noise microphone 320 and includes a circuit that converts the noise signal from the noise microphone 320 from analog to digital. The A/D converter 331 outputs to the coefficient updating unit 333 through the adaptive filter 332 and the transfer function correction unit 336. With signals passing the transfer function correction unit 336, it is possible for the output of the adaptive filter 332 to reflect transfer characteristics including echo cancellation such as reflection or delay to the error sound signal that has been A/D converted and is input to the coefficient updating unit 333, thereby calculating accurate filter coefficients.

The control sound speaker 340 is a speaker that converts a control sound signal received from the D/A converter 334 into a sound wave and outputs the sound wave. The control sound speaker 340 emits a control sound that reduces the noise reaching the vicinity of the ear 301b of the user 301.

The error microphone 350 detects the noise-reduced sound as an error, and provides feedback on the operation result of the noise reduction system 300. As a result, even when the noise environment or the like changes, noise can always be minimized at the user's ear position.

In the noise reduction system 300 of the basic configuration shown in FIG. 3A, the noise emitted from the noise source 310 is detected by the noise microphone 320. In the noise reduction system 300, the noise controller 330 performs signal processing, generates a control sound, and outputs the control sound from the control sound speaker 340. The noise emitted from the noise source 310 and the control sound having an opposite phase are superimposed and transmitted to the ear 301b of the user 301. As a result, the noise and the control sound having the opposite phase cancel out each other, thereby reducing the noise.

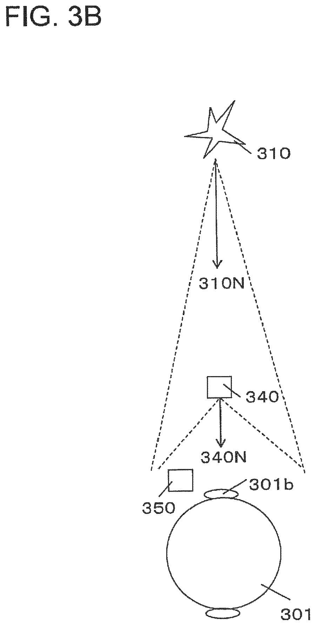

FIG. 3B shows a mechanism for superimposing the control sound emitted from the control sound speaker 340 and the noise emitted from the noise source 310. As shown in FIG. 3B, the control sound speaker 340 is disposed in the main travelling path 310N connecting the noise source 310 and the ear 301b of the user 301. A control sound having an opposite phase to the noise is emitted from the control sound speaker 340 along the main travelling path 340N, whereby the noise and the control sound are superimposed and reach the ear 301b of the user 301. In addition, the error microphone 350 is arranged in the area where the noise and the control are superimposed. As a result, a noise-reduced sound can be detected as an error to provide feedback on the operation result of the noise reduction system 300, whereby the noise reduction effect can be enhanced.

FIG. 4 is a plan view showing an example in which the noise reduction system 300 of FIG. 3 is installed in the seating cabin of an aircraft. In the noise reduction system 300, as shown in FIG. 4, the seat 105 is installed in the shell structure 110 as a target space, which is arranged in the seating cabin A (FIG. 1) of the aircraft where noise is controlled. The shell structure 110 surrounds the seat 105 in a shell shape by the wall surface. The shell structure 110 includes a shell 110a that defines an area dedicated to the user. The seat 105 is disposed inside the shell 110a.

The shell 110a is surrounded on all sides by the front wall 110aa, rear wall 110ab, side wall 110ac, and side wall 110ad. The side wall 110ad is formed with an opening for the passenger to enter and exit the shell 110a. Also, the shell 110a has a rack 110ae in front of the seat 105 at a position surrounded by the front wall 110aa and both side walls 110ac and 110ad. The rack 110ae is used, for example, as a desk.

The seat 105 has a backrest (not shown), a seating part 105a on which the user 401 is seated, a headrest 105c and armrests 105d and 105e. Further, a noise controller 330 (corresponding to the noise controller 330 in FIG. 3A) is provided inside the backrest of the seat 105.

In the acoustic environment in the seating cabin A in an aircraft, there are noise sources such as engines 102a, 102b mounted on the aircraft, an air conditioner disposed inside the seating cabin, and other noise sources. Around the seat 105, the noise emitted from each noise source reaches the outer peripheral portion of the shell 110a. In the seat 105, as shown in FIG. 4, for example, physical acoustic insulation is provided by the shell 110a surrounding the periphery of the seat 105 against noise emitted from the external noise source 310. The noise that has entered the interior of the shell 110a from the noise source 310 reaches near the head 401c of the user 401 seated in the seating section 105b.

If there are various noise sources, such as aircraft noise, and no major noise path can be identified, a plurality of omnidirectional noise microphones may be placed in or near the target space for noise reduction, formed by the shell 110a (control space).

FIG. 4 shows an example in which noise microphones 320a to 320g (corresponding to the noise microphone 320 in FIG. 3A), control sound speakers 340a and 340b (corresponding to the control sound speaker 340 in FIG. 3A), and error microphones 450a and 450b (corresponding to the error microphone 350 in FIG. 3A) are arranged at specific positions in the shell 110a.

As shown in FIG. 4, the noise reduction system 300 defines the inside of the shell 110a as a control space of the seat 105, and defines the error microphones 450a and 450b installed near the ears 401a and 401b of the user 401 seated in the seat 105 as the control center. A feedforward configuration for noise reduction is adopted in which while noise is detected by the noise microphones 320a to 320g, a control sound having an opposite phase to the noise is output from the control sound speakers 340a and 340b by a time when the noise reaches the error microphones 450a and 450b at the control center. Also, in the noise reduction system 300, as shown in FIG. 4, the noise microphone 320a is arranged at a closest position to the error microphones 450a and 450b at the control center, as compared to the other noise microphones 320b to 320g. Specifically, the noise microphone 320a is arranged in the vicinity of the headrest 105c in the seat 105. On the other hand, the other noise microphones 320b to 320g are respectively mounted to the side walls 110ac and 110ad surrounding the side of the shell 110a. As a result, since action satisfying causality and action for strengthening correlation work together, the noise reduction effect can be obtained in a wide frequency band. In general, the noise microphones close to the control center can obtain the correlation in a less number than being distant from the control center. Since this correlation determines the amount of noise reduction, providing the noise microphones close to the control center would result in obtaining the noise reduction effect in a wide frequency band and reducing the cost and the complexity of control signal processing, with a less number of noise microphones. As a result, it is possible to maintain a high correlation between the noise detected by the noise microphones 320a to 320g and the noise actually reaching the vicinity of the ears 401a and 401b of the user 401, while satisfying the causality in the noise reduction control.

Therefore, noise can be effectively reduced in the low to high frequency band even when there are many noise sources or noise coming from various directions as in the seating cabin of the aircraft 100.

### 1. Embodiment 1

The present disclosure further provides a noise reduction device, a noise reduction system or a sound field controlling method that adopts a controlling method not causing sound leakage to the next seat in the above mentioned environment, thereby enabling the user to receive music service from the speaker in the target space without using headphones.

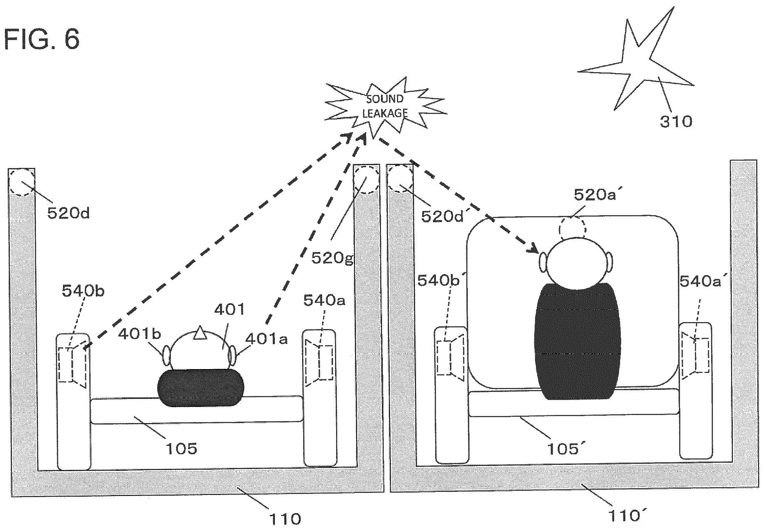

FIG. 6 is an elevation view of the shell structures 110 and 110. The shell structures 110 and 110' are arranged adjacent to each other. In the shell structures 110 and 110', the seats 105 and 105' and the noise reduction system 500 (not shown), which will be described later, are arranged. At predetermined positions of the shell structures 110 and 110', the noise microphones 520a to 520g (some of them not shown) are disposed. The speakers 540a, 540b, 540a' and 540b' are arranged in the seat 105 and 105 ', respectively. Even within the relatively closed shell structures 110 and 110', if the sound source signals output from the speakers 540a, 540b, 540a' and 540b' have a sound pressure greater than the noise in the aircraft, the sound source signals leak to adjacent paths or adjacent seats. Such sound leakage bothers other passengers and interferes with the operations in the aircraft. Therefore, the noise reduction device, the noise reduction system or the sound field controlling method of the present embodiment makes the output of the sound source signal by the speakers 540a, 540b, 540a', 540b' smaller than the sound pressure level of the noise signal. As such, the sound source signal can be output while sound leakage to the outside of the structures 110 and 110' is prevented. As described later, sound leakage to the next seat is prevented by suppressing the sound pressure level of the reproduced sound of the sound source signal to be smaller than the sound pressure level of the noise signal in the aircraft at each frequency, which is indicated in the frequency spectrum of the noise signal in an aircraft. That is, when the reproduced sound signal has no frequency component higher than the sound pressure level of the noise, the reproduced sound is buried in the noise in an aircraft, thereby preventing sound leakage to the next seat.

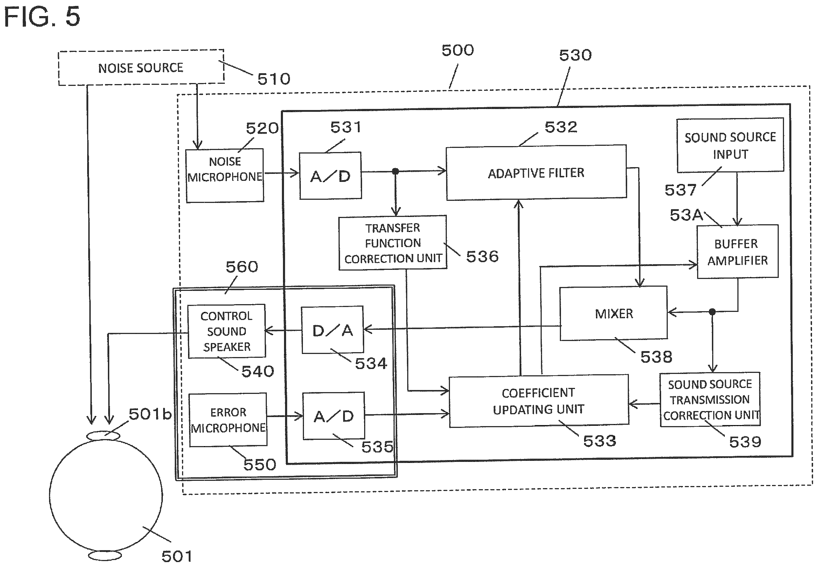

The noise reduction device or the noise reduction system according to Embodiment 1 will be described using FIGS. 5 to 9.

### 1-1. Configuration

FIG. 5 is a block diagram showing a configuration of the noise reduction system 500 according to the present embodiment. The noise reduction system 500 is a feedforward noise reduction system, and includes a noise microphone 520, a noise controller 530 (an example of a noise reduction device), a control sound speaker 540, and an error microphone 550, similar to the noise reduction system 300 shown in FIG. 3A. The noise microphone 520, the control sound speaker 540, and the error microphone 550 correspond to the noise microphone 320, the control sound speaker 340, and the error microphone 350 shown in FIG. 3A.

The noise controller 530 includes an A/D converter 531 (an example of a sound receiver), an A/D converter 535, an adaptive filter 532 (an example of a control sound generator), a coefficient updating unit 533, a D/A converter 534 (an example of a sound output), and a transfer function correction unit 536, which correspond to the A/D converters 331 and 335, the adaptive filter 332, the coefficient updating unit 333, the D/A converter 334, and the transfer function correction unit 336 shown in FIG. 3A, respectively.

The noise controller 530 additionally includes a sound source input 537 (an example of a sound source input), a mixer 538, a sound source transmission correction unit 539, and a buffer amplifier 53A (an example of a sound adjuster).

The sound source input 537 acquires a sound source signal. The sound source signal may be received from an external device or may be stored in advance in a memory. The sound source signal may be, for example, music distribution from the system management apparatus 104, sounds and voices from AVOD services such as movies and music enjoyed by passengers at each seat 105, sound effects and sounds for sleeping and wake-up, BGM, and in-flight broadcasts by crew members.

The mixer 538 mixes the sound source signal from the sound source input 537 with the control sound that cancels out the noise, and outputs the mixed sound through the control sound speaker 540. With the configuration, music service can be provided to passengers without using headphones through the speakers within seats.

The sound source transmission correction unit 539 is functionally the same as the transfer function correction unit 536 for noise, and expresses the transfer characteristics (transfer function and echo cancellation) for the sound source signal.

The buffer amplifier 53Abuffers the inputted sound source signal, and adjusts the sound pressure level and the frequency characteristics of the sound source signal according to the characteristics of the noise signal.

### 1-2. Operations

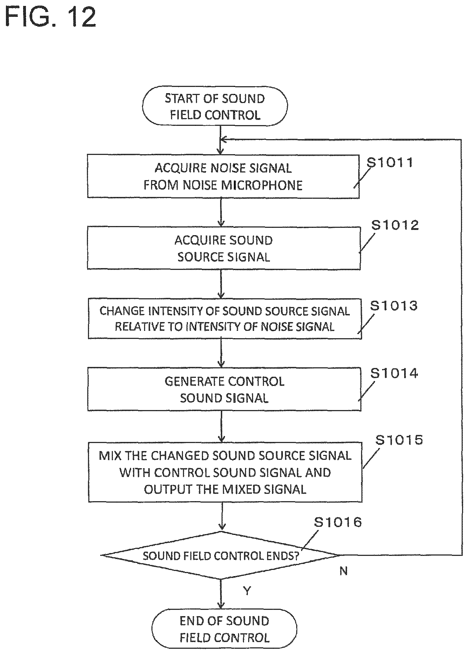

FIG. 12 is a flowchart showing the sound field control operation mainly performed by the noise controller 530.

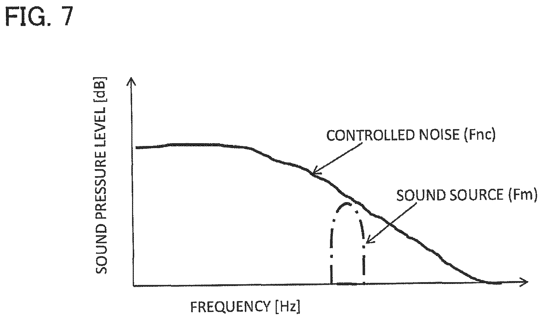

The A/D converter 531 of the noise controller 530 acquires a noise signal from the noise microphone 520 (S1011). The sound source input 537 acquires a sound source signal (S1012). The buffer amplifier 53A changes the intensity of the sound source signal relative to the intensity of the noise signal (S1013). An example of changing the intensity of the sound source signal relative to the intensity of the noise signal will be described with reference to FIGS. 7 to 9.

FIG. 7 shows frequency spectra of a sound source signal (Fm) (dot and dash line) output from the control sound speaker 540 and a noise signal (Fnc) (solid line) detected by the noise microphone 520 when noise reduction control is performed by the noise reduction system 500. The noise microphone 520 is installed, for example, on an upper part of the seat. The buffer amplifier 53A adjusts the sound pressure level of the sound source signal (Fm) before inputted to the mixer 538 so as to be smaller than the sound pressure level of the noise signal (Fnc) by the control of the coefficient updating unit 533 and outputs the resultant signal to the mixer 538, as shown in FIG. 5. As such, the sound source signal is reproduced and output through the speakers while sound is prevented from leaking to the outside of the seat 105.

The sound pressure level of the sound source signal (Fm) and the sound pressure level of the noise signal (Fnc) to be adjusted are preferably measured or estimated by calculation near the ear of a user in an adjacent seat. However, adjusting the sound pressure levels acquired at noise microphones and error microphones disposed inside the shell structure 110, 110', for example, can also provide an effect in which the sound source signal is reproduced and output through the speakers while sound is prevented from leaking to the outside of the seat 105.

The mixer 538 may adjust the sound pressure level of the sound source signal in place of the buffer amplifier 53A. In this case, the mixer 538 mixes the sound source signal (Fm) acquired and selected from the buffer amplifier 53A so as to be smaller than the sound pressure level of the noise signal (Fnc).

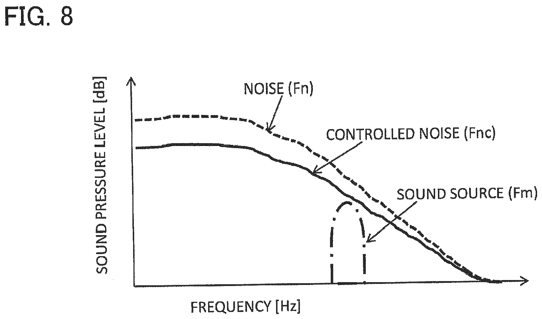

FIG. 8 shows frequency spectrum of a noise signal (Fnc) (solid line), a noise signal (Fn) (dotted line), and a sound source signal (Fm) (dot and dash line). The noise signal (Fnc) is a signal subjected to noise reduction control by the noise reduction system 500 of the present embodiment. The noise signal (Fn) is a signal not subjected to the noise reduction control. The noise signal (Fnc) is, for example, a signal of a sound detected by the error microphone 550 near the control center. The noise signal (Fnc) reduced by the noise reduction system 500 has a sound pressure level smaller than that of the noise signal (Fn) (dotted line) that is not reduced. Therefore, the buffer amplifier 53A needs to adjust the sound pressure level of the sound source signal (Fm) to be smaller than the reduced noise signal (Fnc). On the other hand, when the noise reduction system 500 is not performing noise reduction control, the sound pressure level of the sound source signal (Fm) is controlled to be smaller than the sound pressure level of the noise signal (Fn) (dotted line), thereby preventing sound leakage out of the seat 105.

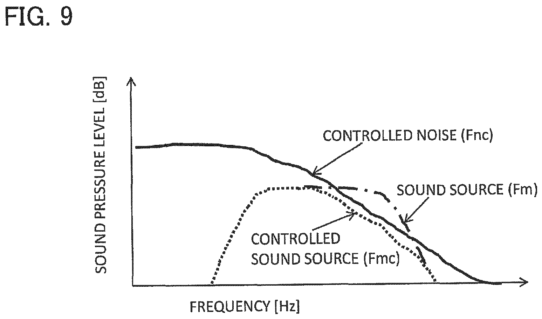

FIG. 9 shows an example in which the sound pressure level of some of the frequency components of the sound source signal (Fm) (dot and dash line) exceeds the sound pressure level of the noise signal (Fnc) (solid line). The noise signal (Fnc) is, for example, a signal of sound detected by the error microphone 550 near the control center. The coefficient updating unit 533 compares the frequency spectra between the sound source signal and the noise signal and controls the amplifier 53A so that the sound pressure level of each frequency of the sound source signal (Fm) does not exceed the sound pressure level of each frequency of the noise signal (Fnc). As a result of this control, a sound source signal (Fmc) (dotted line) is generated.

As described above, the buffer amplifier 53A actively adjusts the acoustic characteristic value, such as frequency spectrum or sound pressure level, of the sound source signal by the control of the coefficient updating unit 533.

The adaptive filter 532 generates a control sound signal that reduces the noise signal (S1014). The mixer 538 mixes the sound source signal whose sound pressure level has been adjusted with the generated control sound signal, and outputs the mixed signal to the control sound speaker 540 via the D/A converter 534 (S1015). The process of steps S1011 to S1015 is repeated (S1016) unless a condition for the end of the operation occurs such as a shut-down of the noise restriction system.

Human voices tend to be perceived even under noise. Therefore, when the sound source signal is a human voice, outputting the sound source signal (Fmc) with a further reduced sound pressure level is effective for sound leakage prevention.

When the sound source signal is reproduced, the intensity of the sound source signal relative to the intensity of the noise signal may be adjusted by delaying the reproduction of the sound source in accordance with sound pressure fluctuation due to the time periodicity of the noise signal. If some of the frequency components of the controlled sound source signal (Fmc) shown in FIG. 9 is greatly reduced to distort the original sound source signal (Fm), the sound quality for the user may be impaired. In order to keep the sound quality, the output timing of the sound source signal may be adjusted by the buffer amplifier 53A so that distortion of the sound source signal (Fmc) is reduced with respect to the noise signal (Fnc) having time periodicity.

When the sound source input 537 receives a predetermined sound for broadcasting, for example, an announcement by a crew member, the sound pressure level of the predetermined sound may not be changed. This is because all users need to hear in-flight broadcasting etc., for which no sound leakage need to be prevented.

### 1-3. Features, etc.

The noise controller 530 (noise reduction device), the noise reduction system 500 or the sound field controlling method according to Embodiment 1 adjusts the sound pressure level or the frequency characteristic of the sound source signal according to the noise frequency spectrum in the target space for sound field control in a seat. Therefore, while noise reduction effect can be obtained, it is possible to prevent sound leakage to an adjacent seat. Thus, the user in the seat 105 can enjoy music appreciation and individual sound service through the speakers at the seat 105 without using headphones. Furthermore, the noise transmitted from the engines of the aircraft and the wind roar is reduced, thereby realizing a comfortable space in the aircraft.

### 2. Embodiment 2

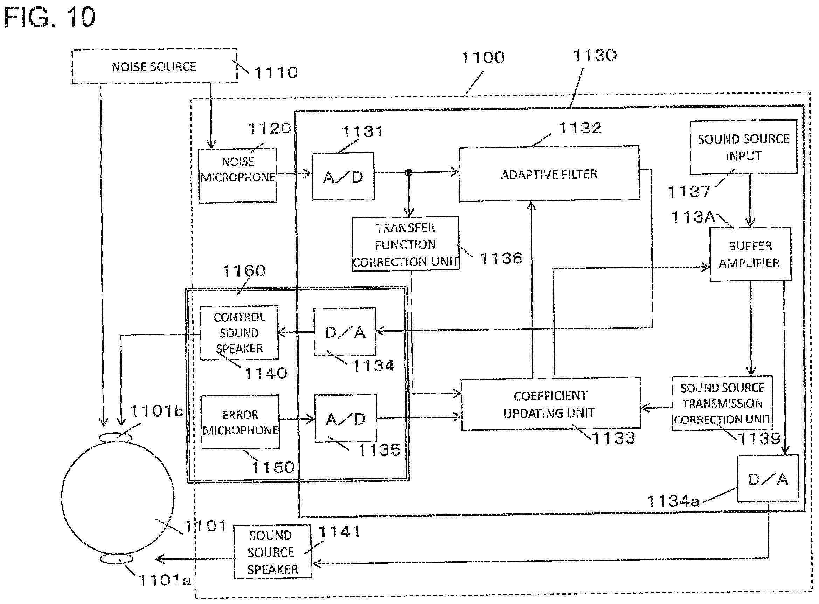

A noise reduction system 1100 according to Embodiment 2 will be described using the block diagram of FIG. 10. The noise reduction system 1100 is a feedforward noise reduction system, and includes a noise microphone 1120, a noise controller 1130 (an example of a noise reduction device), a control sound speaker 1140, and an error microphone 1150, similarly to the noise reduction system 500. The noise controller 1130 includes an A/D converter 1131 (an example of sound receiver), an A/D converter 1135, an adaptive filter 1132 (an example of control sound generator), a coefficient updating unit 1133, a D/Aconverter 1134 (an example of sound output), a transfer function correction unit 1136, a buffer amplifier 113A, and a sound source transmission correction unit 1139, which correspond to the A/D converters 531, 535, the adaptive filter 532, the coefficient updating unit 533, the D/A converter 534, the transfer function correction unit 536, the buffer amplifier 53A, and the sound source transmission correction unit 539 as shown in FIG. 5, respectively.

The description of the same functions as those of the configuration of the noise reduction system 500 shown in FIG. 5 will be omitted.

Unlike the noise reduction system 500, the noise reduction system 1100 includes a sound source speaker 1141 separately from the control sound speaker 1140. The sound source speaker 1141 reproduces and outputs a sound source signal. The noise reduction system 1100 further includes a D/A converter 1134a (an example of sound output) that outputs the sound source signal to the sound source speaker 1141. The noise reduction system 1100 does not have a mixer. The buffer amplifier 113A outputs to the sound source speaker 1141 the sound source signal (Fmc) whose sound pressure level has been adjusted as shown in FIGS. 7 to 9.

In the noise reduction system 1100, the buffer amplifier 113A outputs the sound source signal to the sound source speaker 1141 via the D/A converter 1134a. The sound source speaker 1141 outputs a reproduced sound from the sound source, while the control sound speaker 1140 outputs a control sound.

The control sound speaker 1140 may be designed to be suitable for a low frequency sound in order to output a control sound that reduces noise. Therefore, with the configuration in which the sound source speaker 1141 suitable for the sound of the sound source signal including high frequency is additionally provided, it is possible for the user to hear the sound source signal with a good sound quality. Furthermore, since the position of the sound source speaker 1141 is not limited like the control sound speaker 1140, the arrangement of speakers can be flexible and therefore, a freedom of the design for the target space of sound field control can be greater.

### 3. Other embodiments

### <1>

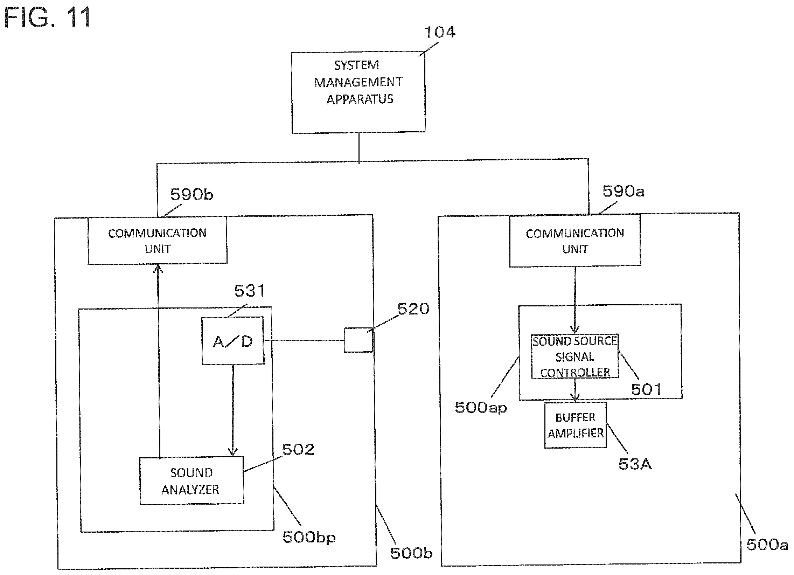

FIG. 11 shows a system in which the noise reduction systems 500a and 500b are arranged in adjacent shell structures 110 respectively and connected to each other via a system management apparatus 104. The adjacent shell structures are similar to those shown in FIG. 6. In the system, the noise reduction system 500a arranged in the shell structure 110 acquires sound leakage information detected by the noise reduction system 500b arranged in the adjacent shell structure 110. The noise rejection system 500a then adjusts the sound pressure level of its sound source signal, based on the sound leakage information.

The system management apparatus 104 is a computer device, for example, a server device that manages the system inside the aircraft.

The noise reduction systems 500a, 500b have a similar configuration and function to Embodiment 1 or Embodiment 2, but have an additional configuration and function as follows.

The noise reduction system 500a includes a processor 500ap including circuitry such as a DSP and a CPU, and executes the processing according to a program to implement the function of the sound source signal controller 501. The sound source signal controller 501 adjusts the sound pressure level of the sound source signal with the buffer amplifier 53A (or the mixer 538 shown in FIG. 5) based on the sound leakage information, which was received from the system management apparatus 104 via the communication unit 590a. The sound leakage information is information indicating that sound is leaking to the adjacent shell structure 110. The sound source signal controller 501 reduces the sound pressure level of the sound source signal based on the sound leakage information. As a result, sound leakage can be prevented more reliably.

The sound leakage is detected based on the sound from noise microphones installed in the adjacent shell structure 110. As the noise microphone 520 of the noise reduction system 500b, for example, noise microphones 520g and 520d' are selected, which are disposed near the adjacent shell structure 110 as shown in FIG. 6.

As shown in FIG. 11, the noise reduction system 500b includes a processor 500bp including circuitry such as a DSP and a CPU, and executes the processing according to a program to implement the function of the sound analyzer 502. The sound analyzer 502 acquires the noise signal from the noise microphone 520 via the A/D converter 531. The sound analyzer 502 determines whether the noise signal includes sound other than noise, based on the frequency characteristics of the sound source signal as shown in FIG. 7 to FIG. 9. When any sound source signal is detected, sound leak information is transmitted to the system management apparatus 104 via the communication unit 590b. The system management apparatus 104 sends sound leakage information to the noise reduction system 500a.

Although FIG. 11 shows the noise reduction system 500a as receiving sound leakage information and the noise reduction system 500b as detecting sound leakage, the noise reduction system 500a and the noise reduction system 500b have the same configuration and function.

### <2>

The arrangement, the number, the operation, and the operation type of the speakers and the microphones are not limited to those of the above examples.

The noise reduction device (noise controller) may be installed at a place other than the inside of the backrest of the seat 105. For example, the noise reduction device may be installed under a seating part of the seat 105, or in a space on the side of or behind the seat 105.

### <3>

The noise controllers 530 and 1130 (noise reduction devices) may be installed not only in the seating cabin in an aircraft but also, for example, in a pilot seat of an aircraft or the like in order to reduce noise in the pilot seat. Or, the noise reduction device may be installed in other vehicles, such as a helicopter, a train, a bus, etc. Furthermore, the noise reduction device may be installed in a building where noise is generated, such as a building nearby a construction site, in a club with live music etc.

### <4>

In the above-described embodiments, some or all of the processing for functional blocks may be executed by a program. Further, some or all of the processing for the functional blocks in the above-described embodiments may be executed by a processer in a computer. The program for executing this processing may be stored in a storage device such as a hard disk or a ROM and run by being read out by the ROM or a RAM.

In the above embodiments, the processor described as a DSP or CPU may be replaced with a processor that is configured as a dedicated electronic circuit designed to implement predetermined functions. The processor may be made up of one or a plurality of processors.

The processes of the sound field controlling method shown in FIG. 12 are not necessarily limited to the above description, and can be performed in a different order or simultaneously performed without departing from the scope of the invention.

### <5>

In the present disclosure, an apparatus or a system includes a set of a plurality of components (apparatus, modules (parts), and the like). It does not matter whether all the components are in a single housing or not. A "system" may refer to both a plurality of devices located in separate housings and connected to each other via a network, and one device in which a plurality of modules are located in one housing.

In understanding the scope of the present disclosure, the term "configured" as used herein to describe a component, section, or a part of a device includes hardware and/or software that is constructed and/or programmed to carry out the desired function.

In understanding the scope of the present disclosure, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms "including," "having," and their derivatives. Also, the terms "part," "section," "portion," "member," or "element" when used in the singular can have the dual meaning of a single part or a plurality of parts.

While only selected exemplary embodiments have been chosen to illustrate the present invention, it will be apparent to those skilled in the art from this disclosure that various changes and modifications can be made herein without departing from the scope of the invention as defined in the appended claims. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the exemplary embodiments according to the present invention are provided for illustration only, and not for the purpose of limiting the invention as defined by the appended claims and their equivalents.

## Claims

1. A noise reduction device (530, 1130) operable to generate and output a control sound for reducing noise, the noise reduction device comprising:
a sound receiver (531, 1131) for receiving a first sound signal acquired from a microphone (520, 1120);
a sound source input (537, 1137) for receiving an input of a second sound signal from a sound source;
a sound adjuster (53A, 113A, 538) for changing an intensity of the second sound signal relative to an intensity of the first sound signal;
a control sound generator (532, 1132) for generating a third sound signal that reduces the first sound signal;
a controller (533, 1133) for controlling a change of the intensity of the second sound signal and the generation of the third sound signal; and
a sound output (560, 1160, 1141) for outputting the third sound signal and outputting the second sound signal to a speaker (540, 1140, 1141) at the intensity changed by the sound adjuster (53A, 113A, 538).

2. The noise reduction device according to claim 1, wherein the sound adjuster (53A, 113A, 538) is operable to change the intensity of the second sound signal so as to be smaller than the intensity of the first sound signal.

3. The noise reduction device according to claim 1 or 2, wherein the sound adjuster (53A, 113A, 538) is operable to change the intensity of the second sound signal relative to the intensity of the first sound signal by changing a frequency characteristic of the second sound signal.

4. The noise reduction device according to any one of claims 1 to 3, wherein the sound adjuster (53A, 113A, 538) is operable to change the intensity of the second sound signal relative to the intensity of the first sound signal by adjusting an output timing of the second sound signal according to a periodic fluctuation of the first sound signal.

5. The noise reduction device according to any one of claims 1 to 4, wherein the sound source input (537, 1137) is operable to receive an input of a fourth sound signal that is a human voice from the sound source, and the sound adjuster (53A, 113A, 538) is operable to receive an intensity of the fourth sound signal so as to be smaller than the intensity of the first sound signal and the intensity of the second sound signal.

6. The noise reduction device according to any one of claims 1 to 5, wherein when the second sound signal is a sound signal by broadcasting, the sound adjuster (53A, 113A, 538) does not change the intensity of the second sound signal.

7. A noise reduction system comprising:
the noise reduction device according to any one of claims 1 to 6;
one or more microphones (520, 550, 1120, 1150) for acquiring the noise; and
one or more speakers (540, 1140, 1141) for outputting the second sound signal and the third sound signal.

8. The noise reduction system according to claim 7, wherein
the one or more speakers are one or more control sound speakers (540),
the noise reduction device (530) includes a mixer (538) for mixing the second sound signal with the third sound signal, and
the control sound speaker (540) is operable to output the mixed sound signal from the mixer (538).

9. The noise reduction system according to claim 7, wherein
the one or more speakers include a control sound speaker (1140) and a sound source speaker (1141), and
the control sound speaker (1140) is operable to output only the third sound signal, and the sound source speaker (1141) is operable to output only the second sound signal.

10. The noise reduction system according to claim 8 or 9, wherein the one or more microphones include a noise microphone (520, 1120) for detecting a sound emitted from a noise source and an error microphone (550, 1150) for detecting an error sound, the error sound obtained as a result of superimposition of the sound emitted from the noise source and the control sound emitted from the control sound speaker (540, 1140).

11. The noise reduction system according to any one of claims 7 to 10, wherein
the noise reduction system is disposed in one target space (110) and acquires sound leakage information detected by another noise reduction system disposed in another target space (110') adjacent to the one target space (110), and
the sound adjuster (53A, 113A, 538) is operable to adjust the intensity of the second sound signal based on the sound leakage information..

12. A sound field controlling method for controlling a sound in a target space, comprising:
receiving a first sound signal acquired from a microphone (520, 1120);
receiving from a sound source a second sound signal different from the first sound signal;
changing an intensity of the second sound signal relative to an intensity of the first sound signal;
generating a third sound signal that reduces the first sound signal;
outputting the third sound signal to a speaker; and
outputting to the speaker the second sound signal whose intensity has been changed.
